# EUROPEAN PATENT SPECIFICATION

(11) **EP 2 270 606 B1**
(45) Date of publication and mention of the grant of the patent: **10.07.2013**
(21) Application number: 09729691.7
(22) Date of filing: 06.04.2009
(51) Int. Cl.: G03G 15/00, C08K 3/22, C08K 5/29, C08L 67/00, G03G 15/16, C08L 67/02

(54) **ELECTROCONDUCTIVE ENDLESS BELT**
ELEKTRISCH LEITENDES ENDLOSBAND
BANDE SANS FIN ÉLECTROCONDUCTRICE

(30) Priority: 10.04.2008 JP 2008102489; 05.09.2008 JP 2008228855
(43) Date of publication of application: 05.01.2011
(73) Proprietor: Bridgestone Corporation, Tokyo 104-8340 (JP)
(72) Inventor: SUZUKI, Takahiro, Kodaira-shi Tokyo 187-0031 (JP); MACHIDA, Kunio, Kodaira-shi Tokyo 187-0031 (JP)
(74) Representative: Waldren, Robin Michael
(86) International application number: PCT/JP2009/057052
(87) International publication number: WO 2009/125738

(56) References cited:
- JP-A- 5 117 517
- JP-A- 5 213 504
- JP-A- 10 237 278
- JP-A- 2000 264 474
- JP-A- 2005 274 751
- JP-A- 2006 182 813

## Description

### TECHNICAL FIELD

The present invention relates to an electroconductive endless belt (hereinafter, also simply referred to as "belt") used to transfer a toner image onto a recording medium, such as paper, in an electrostatic recording process performed in an electrophotographic apparatus or an electrostatic recording apparatus, such as a copy machine or printer, which toner image is formed by providing a developer onto the surface of an image-forming member such as a latent image-retaining member retaining an electrostatic latent image on its surface.

### BACKGROUND ART

In an electrostatic recording process performed by a copy machine, printer, conventionally, printing is carried out by a method comprising the steps of: first, uniformly charging the surface of a photoconductor (latent image-retaining member); projecting from an optical system an image onto this photoconductor; removing the charge from the part exposed to light to form an electrostatic latent image; subsequently providing a toner to the thus formed electrostatic latent image to form a toner image by electrostatic adsorption of the toner; and transferring the thus formed toner image onto a recording medium such as paper, OHP or photographic paper.

Also in a color printer and color copy machine, printing is performed basically in accordance with the aforementioned process; however, in the case of color printing, since color tones are reproduced by using four toners of magenta, yellow, cyan and black, it is necessary to carry out a step of overlaying these toners at a prescribed ratio to obtain desired color tones. Several techniques have been proposed for performing this step.

The first example of such technique is image-on-image development method. In this method, for visualization of an electrostatic latent image formed on a photoconductor by providing toners, an image is, in the same manner as in black-and-white printing, developed by sequentially overlaying the aforementioned four toners of magenta, yellow, cyan and black, thereby forming a color toner image on the photoconductor. This method enables a relatively compact apparatus configuration; however, it has a problem in that a high quality image cannot be obtained since gradation control is extremely difficult.

The second example of the aforementioned proposed technique is tandem method. In this method, a color image is reproduced by the steps of: developing latent images on each of four photoconductor drums using magenta toner, yellow toner, cyan toner and black toner to form each toner image by magenta, yellow, cyan and black; and sequentially transferring the toner images thus formed on the photoconductor drums, which are configured in a line, onto a recording medium such as paper to overlay the toner images on the recording medium. This method provides a good quality image; however, the apparatus is large and expensive since the four photoconductor drums, each of which has a charging mechanism and a developing mechanism, have to be configured in a line.

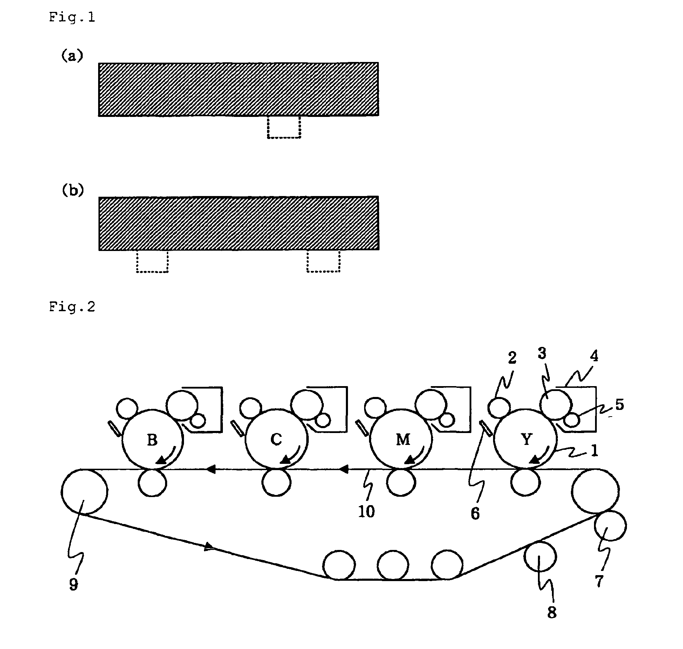

Illustrated in Fig. 2 is an example of the constitution of a printing unit of an image-forming apparatus used in such tandem method. The printing unit has four printing units aligned sequentially corresponding to each toner of yellow (Y), magenta (M), cyan (C) and black (B), each printing unit of which is constituted by a photoconductor drum 1, a charging roller 2, a developing roller 3, a developing blade 4, a toner feeding roller 5 and a cleaning blade 6. The toners are sequentially transferred onto a sheet as it is carried by a transfer conveyer belt 10, which is circularly driven by driving rollers (driving member) 9, thereby forming a color image. Charging of the transfer conveyer belt and charge-removal therefrom are carried out by a charging roller 7 and a charge-removing roller 8, respectively. In addition, an adsorption roller (not shown) is used to charge the sheet in order to allow the sheet to adsorb onto the belt. By having such the above constitution, generation of ozone can be suppressed. The adsorption roller not only transfers the sheet from a sheet feeding path to the transfer conveyer belt, but also performs electrostatic adsorption of the sheet onto the transfer conveyer belt. Further, separation of the sheet therefrom after image transfer can be carried out solely by self stripping since the adsorption force between the sheet and the transfer conveyer belt becomes low by lowering the transfer voltage.

The material of the transfer conveyer belt 10 may be resistive or dielectric; however, each material type has its advantages and disadvantages. Since a resistive belt retains charges for only a short duration, in cases where such resistive belt is employed for the tandem-type transfer, there is only a limited amount of charge injection during the transfer and the increase in the voltage is relatively small even when four colors are consecutively transferred. Furthermore, even in cases where the resistive belt is repeatedly employed to consecutively transfer sheets, it is not required to electrically reset the belt since charges thereon should have been already released by the time of transferring the next sheet. However, such resistive belt has disadvantages in that the transfer efficiency is affected by environmental variations as the resistance value varies depending on the environmental variations, and that it is likely to be affected by the thickness and width of the printing sheet.

In contrast, a dielectric belt does not spontaneously release injected charges; therefore, injection and release of charges have to be controlled electronically. However, since the charges are stably retained by the belt, sheet adsorption is assured and sheet transfer is performed at a high accuracy. In addition, as the dielectric constant is less dependent on the temperature and humidity, the transfer process is relatively stable against environmental variations as well. A disadvantage of such dielectric belt is that charges are accumulated from repeated transfers, thereby increasing the transfer voltage.

The third example of the aforementioned proposed technique is transfer drum method in which a color image is reproduced by rotating a transfer drum, which is lapped with a recording medium such as paper, four times, in each of which rotation magenta, yellow, cyan and black toners on a photoconductor are sequentially transferred onto the recording medium. This method yields an image having a relatively high quality; however, in cases where the recording medium is a thick paper such as a postcard, since lapping of such recording medium around the transfer drum is difficult, this method has a problem in that the type of the recording medium is limited.

As an alternative method to the aforementioned image-on-image development method, tandem method and transfer drum method, intermediate transfer method, which yields a good quality image without particularly increasing the size of the apparatus and limiting the type of the recording medium, has been proposed.

That is, in this intermediate transfer method, an intermediate transfer member comprising a drum and a belt which transfer and temporarily retain a toner image formed on a photoconductor is provided, and around this intermediate transfer member, four photoconductors each having a toner image with magenta, a toner image with yellow, a toner image with cyan and toner image with black are arranged. The toner images of four colors are sequentially transferred onto the intermediate transfer member from the photoconductors, thereby forming a color image on this intermediate transfer member, which color image is then transferred onto a recording medium such as paper. Therefore, since the gradation is adjusted by overlaying the toner images of four colors, a high quality image can be obtained. At the same time, the apparatus does not have to be particularly scaled up since there is no need to lineally arrange the photoconductors as in the case of tandem method, and the type of recording medium is not restricted as the recording medium does not have to be lapped around the drum.

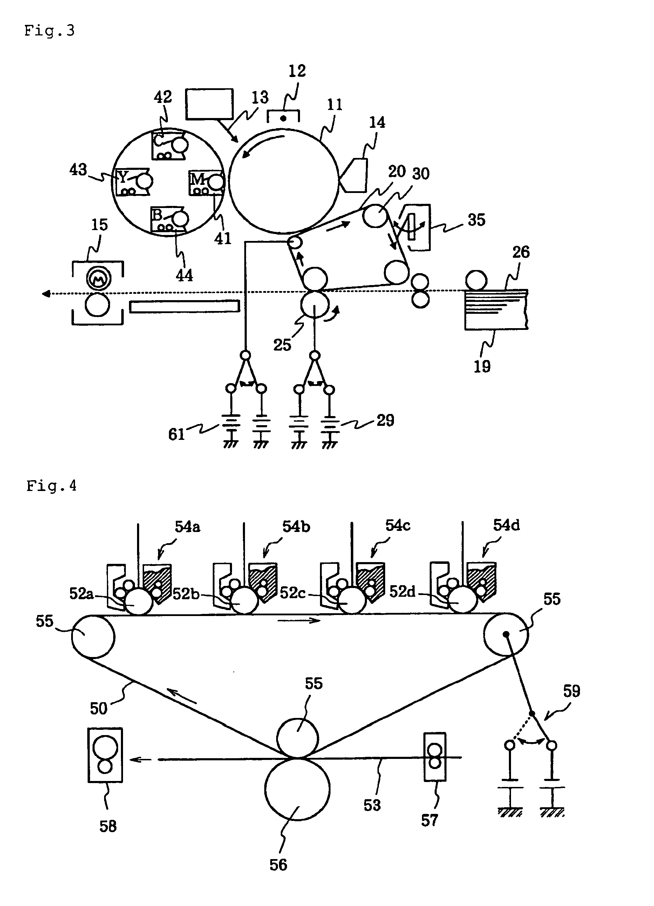

As an apparatus to perform color-image formation by such intermediate transfer method, Fig. 3 illustrates an image forming apparatus which comprises an intermediate transfer member in the form of an endless belt.

In Fig. 3, indicated as 11 is a drum photoconductor which rotates in the direction of the arrow. This photoconductor 11 is charged by a primary charging unit 12 and an image exposure unit 13 subsequently removes the charge from the part exposed to light, forming an electrostatic latent image corresponding to a first color component onto the photoconductor 11. By a developing unit 41, the thus formed electrostatic latent image is then developed with the first color, magenta toner (M), to form a toner image of the first color, magenta, onto the photoconductor 11. Subsequently, this toner image is transferred onto an intermediate transfer member 20, which is being circularly rotated in contact with the photoconductor 11 by a driving roller (driving member) 30. In this step, the image transfer from the photoconductor 11 onto the intermediate transfer member 20 is carried out at the nip portion between the photoconductor 11 and the intermediate transfer member 20 by primary transfer bias applied from a power source 61 to the intermediate transfer member 20. After the transfer of the toner image of the first color, magenta, onto this intermediate transfer member 20, the surface of the aforementioned photoconductor 11 is cleaned by a cleaning unit 14, thereby completing the first round of the image development and transfer operation by the photoconductor 11. In each of the subsequent three rotations of the photoconductor 11, by sequentially using developing units 42 to 44, a toner image of second color, cyan; a toner image of third color, yellow; and a toner image of fourth color, black, are sequentially formed onto the photoconductor 11 and superimposed onto the intermediate transfer member 20 in each rotation. Consequently, a composite color toner image corresponding to the desired color image is formed onto the intermediate transfer member 20. In the apparatus shown in Fig. 3, after each rotation of the photoconductor 11, the developing units 41 to 44 are sequentially placed into the position to perform sequential development by the magenta toner (M), cyano toner (C), yellow toner (Y), and black toner (B).

In the next step, the intermediate transfer member 20 onto which the aforementioned composite color toner image has been formed comes in contact with a transfer roller 25, and to the nip portion thereof, a recording medium 26 such as paper is fed from a paper feeding cassette 19. Simultaneously, secondary transfer bias is applied from a power source 29 to the transfer roller 25 and the composite color toner image is transferred and heat-fixed onto the recording medium 26 from the intermediate transfer member 20, thereby forming a final image. After the transfer of the composite color toner image onto the recording medium 26, residual toners on the surface of the intermediate transfer member 20 are removed by a cleaning unit 35 to return the intermediate transfer member 20 to the initial condition for the next image formation process.

There is also an intermediate transfer method combined with the tandem method. Fig. 4 illustrates an image forming apparatus of intermediate transfer method in which color images are formed using an intermediate transfer member in the form of an endless belt.

In the illustrated apparatus, a first developing unit 54a to a fourth developing unit 54d, which develop electrostatic latent images on photoconductor drums 52a to 52d with yellow, magenta, cyan and black, respectively, are sequentially arranged along an intermediate transfer member 50. This intermediate transfer member 50 is circularly driven in the direction of the arrow, and thereonto, toner images of four colors that have been formed on each of the photoconductor drums 52a to 52d of developing units 54a to 54d are sequentially transferred, thereby forming a color toner image onto this intermediate transfer member 50. The thus formed color toner image is then transferred onto a recording medium 53, such as paper, to be printed out. In any of the aforementioned apparatuses, the sequence of the toners used in the image development is not particularly restricted and can be arbitrarily selected.

In Fig. 4, the symbol 55 represents a driving roller or tension roller for circularly driving the intermediate transfer member 50, and the symbols 56 and 57 represent a recording medium feeding roller and recording medium feeding device, respectively, while the symbol 58 represents a fixing device which fixes an image on a recording medium by heating. Further, the symbol 59 represents a power source unit (voltage applying means) which applies a voltage to the intermediate transfer member 50. This power source device 59 can reverse the positive and negative of the voltage to be applied between when transferring toner images to the aforementioned intermediate transfer member 50 from the photoconductor drums 52a to 52d and when transferring the thus formed color toner image from the intermediate transfer member 50 to the recording medium 53.

Conventionally, for the electroconductive endless belt used as the transfer conveyer belt 10, intermediate transfer members 20 and 50, semi-conductive resin film belts or rubber belts having a fiber-reinforced member body have been mainly used. Among such resin film belts, for example, those of which polycarbonate (PC) is mixed with carbon black, those comprising a polyalkylene terephthalate as the principal resin, and those comprising a thermoplastic polyimide as the principal resin, are known.

In addition, for example, Patent document 1 discloses an intermediate transfer seamless belt having flame resistance which contains as a base material a polycarbonate and a polyalkylene terephthalate wherein a polycarbonate is a main component, and a carbon black, a flame retardant, an antimony compound and a polyolefin are added to the base material in order to provide a flame retardant resin having high heat stability. Further, Patent document 2 discloses a seamless belt consisting of a thermoplastic resin composition containing a polyester, a polyester elastomer, an electroconductive filler, and a bromine-containing flame retardant in order to provide an electroconductive seamless belt having an excellent folding resistance. Furthermore, Patent document 3 discloses a seamless belt having a laminated structure including a layer containing a carbon black and a flame retardant and a durable outer layer containing a carbon black but not containing a flame retardant in order to provide an excellent durable electroconductive seamless belt having a flame resistance.

Further, for example, Patent documents 4 and 5 disclose a method for adding a carbodiimide compound to a resin, such as a thermoplastic polyalkylene naphthalate resin in order to prevent a decrease in molecular weight caused by hydrolysis when molding a belt which contains a polyester resin as a base material.

### RELATED ART REFERENCE

### PATENT DOCUMENTS

Patent Document 1: Japanese Unexamined Patent Application Publication No. 6-93175 (the claims)
Patent Document 2: Japanese Unexamined Patent Application Publication No. 10-237278 (the claims)
Patent Document 3: Japanese Unexamined Patent Application Publication No. 5-213504 (the claims)
Patent Document 4: Japanese Unexamined Patent Application Publication No. 2005-274751 (the claims)
Patent Document 5: Japanese Unexamined Patent Application Publication No. 2007-25130 (the claims)

### DISCLOSURE OF THE INVENTION

### PROBLEMS TO BE SOLVED BY THE INVENTION

In the aforementioned Patent documents 1 to 3, in order to impart a flame resistance, a bromine-type flame retardant is added to the belt, and in order to impart a flame resistance more efficiently, an antimony trioxide is added as an auxiliary flame retardant. The antimony trioxide has an excellent property as an auxiliary flame retardant, while it has properties to decompose a resin such as polyesters and to promote a reaction of the bromine-type flame retardant with a polyester. As a result, the melt stability during the belt molding is poor, and thus there is such a problem that the antimony trioxide deteriorates the durability of the belt. Further, since the belt described in Patent document 1 contains a polycarbonate, which is an amorphous resin, as a main component, the hinge property (failure characteristics) described in example is only around several hundred times. Therefore, the belt of Patent document 1 is inferior in durability. From such a point of view, the belt is insufficient in demanded belt characteristics.

Further, as disclosed in Patent documents 4 and 5, the addition of a carbodiimide compound improves durability of the belt. However, an aliphatic carbodiimide compound conventionally used has an influence on decomposition of a resin by an antimony compound. Therefore, there is room for improving the melt stability effect during the retention at a high temperature and thus a larger effect on an improvement in durability of the belt has been desired. Furthermore, since the addition of a carbodiimide compound tends to make unevenness on the surface of the belt, so that an improvement in surface properties of the belt has also been desired.

In view of the above, an object of the present invention is to provide an electroconductive endless belt having a good melt stability during molding of the belt as well as an excellent durability and surface properties of the belt by solving the aforementioned problems in conventional techniques.

### MEANS FOR SOLVING THE PROBLEMS

In order to solve the aforementioned problems, the present inventors intensively studied to discover that an electroconductive endless belt having a good melt stability during molding of the belt as well as an excellent durability and surface properties of the belt is assured by adding a specific flame retardant, an auxiliary flame retardant and a carbodiimide compound to a specific resin component, thereby completing the present invention.

That is, the present invention is an electroconductive endless belt for use in an image forming apparatus, which comprises a thermoplastic polyester resin as a main component, to which a bromine-type flame retardant, an auxiliary flame retardant antimony compound and an aromatic carbodiimide compound are added.

In the electroconductive endless belt of the present invention, said aromatic carbodiimide compound is preferably at least one compound selected from the group consisting of N,N'-diphenylcarbodiimide,
N,N'-di-2,6-dimetylphenylcarbodiimide,
N,N'-di-2,6-diisopropylphenylcarbodiimide,
N,N'-di-2,6-di-tert-butylphenylcarbodiimide,
N-tolyl-N'-phenylcarbodiimide,
N,N'-di-p-nitrophenylcarbodiimide,
N,N'-di-p-aminophenylcarbodiimide,
N,N'-di-p-hydroxyphenylcarbodiimide,
p-phenylene-bis-di-o-tolylcarbodiimide,
p-phenylene-bis-dicyclohexylcarbodiimide,
ethylene-bis-diphenylcarbodiimide,
and the compound represented by the following general formula (I): 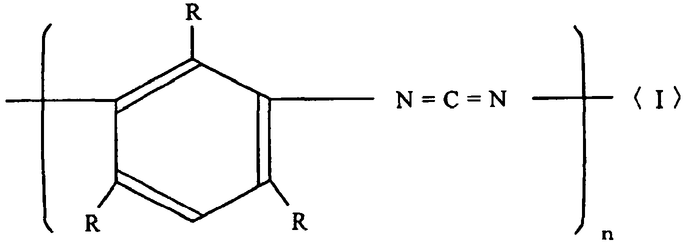 wherein R represents a hydrogen atom or an alkyl group having 1 to 4 carbon atoms, and n represents an integer of 2 to 20. Further, said thermoplastic polyester resin is preferably a polybutylene terephthalate resin and the electroconductive endless belt preferably contains a thermoplastic polyester elastomer as a resin component. Furthermore, the amount of said aromatic carbodiimide compound is preferably 0.05 to 15 parts by mass with respect to 100 parts by mass of the total amount of said thermoplastic polyester resin and said thermoplastic polyester elastomer.

Further, in the present invention, said antimony compound is preferably antimony tetroxide. The electroconductive endless belt preferably has a lamination structure equipped with at least a base layer and a surface layer sequentially overlaid from the inside, and at least one layer of said base layer and said surface layer preferably contains a thermoplastic polyester resin as a main component, to which a bromine-type flame retardant, an antimony compound and an aromatic carbodiimide compound are added.

### EFFECTS OF THE INVENTION

According to the present invention, by having the aforementioned composition, an electroconductive endless belt having a good melt stability during the molding of the belt, as well as an excellent durability and surface properties of the belt can be achieved, solving the aforementioned problems in conventional techniques.

### BRIEF DESCRIPTION OF THE DRAWINGS

Fig. 1 is a cross-sectional view showing an electroconductive endless belt according to one embodiment of the present invention in the width direction.
Fig. 2 is a schematic view showing an image forming apparatus of tandem method using a transfer conveyer belt, as one example of an image forming apparatus.
Fig. 3 is a schematic view showing an intermediate transfer apparatus using an intermediate transfer member, as another example of an image forming apparatus.
Fig. 4 is a schematic view showing another intermediate transfer apparatus using an intermediate transfer member, as further another example of an image forming apparatus.

### BEST MODE FOR CARRYING OUT THE INVENTION

Preferred embodiments of the present invention will be described in detail.

Electroconductive endless belts are generally grouped into jointed belts and jointless belts (so-called seamless belts). The present invention can be either of them; however, it is preferably a seamless belt. As already described, the electroconductive endless belt according to the present invention can be used as a transfer member in image forming apparatuses of the tandem method and intermediate transfer method.

In cases where the electroconductive endless belt of the present invention is, for example, the transfer conveyer belt represented by the reference symbol 10 in Fig. 2, the belt is driven by a driving member such as the driving roller 9 and toners are sequentially transferred onto a recording medium as the recording medium is carried by the belt, thereby forming a color image.

Further, in cases where the electroconductive endless belt of the present invention is, for example, the intermediate transfer member represented by the reference symbol 20 in Fig. 3, by arranging the intermediate transfer member, which is circularly driven by a driving member such as the driving roller 30, between the photoconductor drum (latent image-retaining member) 11 and the recording medium 26 such as paper, a toner image formed on the surface of the aforementioned photoconductor drum 11 is transferred and temporarily retained on the intermediate transfer member 20 and subsequently transferred onto the recording medium 26. As already described, the apparatus of Fig. 3 performs color printing by the intermediate transfer method.

Furthermore, in cases where the electroconductive endless belt of the present invention is, for example, the intermediate transfer member represented by the reference symbol 50 in Fig. 4, by arranging the intermediate transfer member, which is circularly driven by a driving member such as the driving roller 55, between the developing units 54a to 54d equipped with the photoconductor drums 52a to 52d and the recording medium 53 such as paper, toner images of four colors formed onto the surface of each of the photoconductor drums 52a to 52d are transferred and temporarily retained and subsequently transferred onto the recording medium 53, thereby forming a color image. Explained in the above is concerning the cases where toners of four colors are used; however, it is needless to say that toners are not restricted to four colors in any of the aforementioned apparatuses.

The electroconductive endless belt of the present invention is an electroconductive endless belt for use in an image forming apparatus, which comprises a thermoplastic polyester resin as a main component, to which a bromine-type flame retardant, an auxiliary flame retardant antimony compound and an aromatic carbodiimide compound are added. Adding the aromatic carbodiimide compound to the main component improves melt stability, durability and surface properties, compared with adding an aliphatic carbodiimide compound to the main component. It is considered that these effects are related to the stability of the aromatic carbodiimide to the antimony compound and the compatibility of the aromatic carbodiimide with the aromatic polyester resin.

A thermoplastic polyester resin which can be used in the electroconductive endless belt of the present invention is not particularly restricted, as long as the desired effects of the present invention can be acquired. Specifically, examples thereof include thermoplastic polyalkylene naphthalate resins (for example, a polyethylene naphthalate ( PEN ) resin, a polybutylene naphthalate ( PBN ) resin), thermoplastic polyalkylene terephthalate resins (for example, a polyethylene terephthalate ( PET ) resin, a glycol-modified polyethylene terephthalate (PETG) resin, a polybutylene terephthalate ( PBT ) resin), and the PBT resin is preferable. Two or more of such thermoplastic polyester resins may be used in combination.

Further, the bromine-type flame retardant which can be used in the electroconductive endless belt of the present invention is not particularly restricted, as long as the desired effects of the present invention can be acquired. Examples thereof include brominated phenoxy type flame retardants, brominated polystyrene type flame retardants, aromatic low-molecular-weight type flame retardants, brominated epoxy type flame retardants, brominated epoxy-modified type flame retardants. Furthermore, in order to exhibit flame resistance steadily, the amount of the bromine-type flame retardant according to the present invention is preferably 1 to 30 parts by mass, more preferably 5 to 20 parts by mass with respect to 100 parts by mass of the total amount of the thermoplastic polyester resin and/or a thermoplastic polyester elastomer described below. If the amount of the bromine-type flame retardant is too large, belt properties may decrease. As a result, a problem such as belt breaking may arise.

Furthermore, as a specific example of the aforementioned brominated epoxy-type flame retardant, a tetrabromobisphenol-A derivative is preferably examplified. The brominated epoxy-type flame retardant has a good compatibility with a polyester resin and a polyester elastomer, and is excellent in dispersibility. As for such brominated epoxy-type flame retardant, the terminals of the molecule thereof are preferably capped with tribromophenol. Thereby, the heat stability during the retention can be improved. Unless the terminals of the molecule of brominated epoxy-type flame retardant are capped with tribromophenol, the viscosity increases through a reaction with resin or the retention time becomes longer, so that gelation may occur, resulting in unstability of the fluidity on the melting, which is not preferable.

Further, in the belt of the present invention, in addition to the aforementioned bromine-type flame retardant, an antimony compound is added to the main component as an auxiliary flame retardant. Thereby, the amount of the bromine-type flame retardant required to acquire the desired fire resistance can be reduced to provide a flame resistance efficiently to the belt. Examples of such antimony compound includes antimony tetroxide (Sb₂O₄), sodium antimonate, antimony trioxide (Sb₂O₃) and antimony pentoxide (Sb₂O₅), preferably antimony tetroxide (Sb₂O₄), and sodium antimonate, more preferably antimony tetroxide. The amount of formulation of the bromine-type flame retardant/the antimony compound is, for example, usually 95/5 to 50/50, preferably 90/10 to 60/40 in the relative ratio. In case the amount of the antimony compound is less than 95/5 in the aforementioned relative ratio, flame resistance effect may not be acquired. In contrast, in case the amount of the antimony compound is more than 50/50, the surface properties and flexibility may deteriorate. Both of cases are not preferable.

The aforementioned antimony compounds have a property to promote decomposing polyester resins at melting state. Antimony trioxide has the highest decomposition property among above mentioned antimony compounds, and the decomposition property lowers in order of sodium antimonate, antimony tetroxide. Since the melting time of a resin depends on a molding method, it is necessary to choose the most suitable antimony compound. In case unsuitable antimony compound is chosen, the molecular weight of a polyester resin decreases by decomposition at the melting time. Therefore, the fluidity increases at an accelerating pace with time passing, to thereby deteriorate a melt stability of the polyester resin. In addition, the deterioration of physical properties occurs due to the decrease of the molecular weight. In case a molding method which needs long melting time is adopted, it is preferable to use a sodium antimonate and an antimony tetroxide which have low decomposition property, more preferable to use an antimony tetroxide.

The belt of the present invention can achieve flame resistance more than VTM -2 in the UL94 standard by using the aforementioned bromine-type flame retardant in combination with the aforementioned antimony compound. Still, the other flame retardant and an auxiliary flame retardant can be added to the main component in addition to the aforementioned bromine-type flame retardant and antimony compound, as long as the effects of the present invention are not impaired.

Further, in the belt of the present invention, an aromatic carbodiimide compound is blended. A carbodiimide compound conventionally used (trade name: CARBODILITE; manufactured by Nisshinbo Holdings Inc.) is an aliphatic carbodiimide compound. However, the carbodiimide compound used in the present invention is an aromatic carbodiimide compound. The aromatic carbodiimide compound is not particularly restricted as long as a desired effect of the present invention can be acquired, and for example, aromatic carbodiimide compounds such as N,N'-diphenylcarbodiimide,
N,N'-di-2,6-dimetylphenylcarbodiimide,
N,N'-di-2,6-diisopropylphenylcarbodiimide,
N,N'-di-2,6-di-tert-butylphenylcarbodiimide,
N-tolyl-N'-phenylcarbodiimide,
N,N'-di-p-nitrophenylcarbodiimide,
N,N'-di-p-aminophenylcarbodiimide,
N,N'-di-p-hydroxyphenylcarbodiimide,
p-phenylene-bis-di-o-tolylcarbodiimide,
p-phenylene-bis-dicyclohexylcarbodiimide,
ethylene-bis-diphenylcarbodiimide,
and the compound represented by the following general formula (I) : 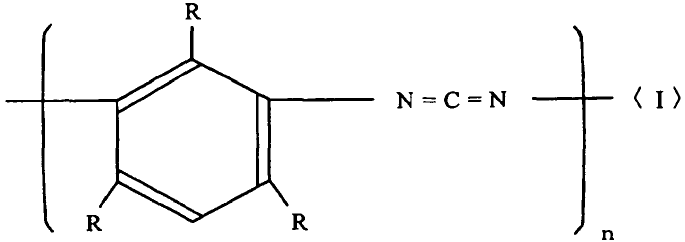 wherein R represents a hydrogen atom or an alkyl group having 1 to 4 carbon atoms, and n represents an integer of 2 to 20 can be used. These aromatic carbodiimide compounds are described in Japanese Unexamined Patent Application Publication No. 8-73719, Japanese Unexamined Patent Application Publication No. 2007-126509, Japanese Patent No.3359736, and Japanese Patent No.3936488.

Specific examples of aforementioned aromatic carbodiimide compounds include poly(1,3,5-triisopropylphenylene-2,4,carbodiimide), such as Stabaxol P(trade name, molecular weight: 3000), Stabaxol P100 (trade name, molecular weight: 10000), manufactured by Rhein Chemie Co., Ltd. and the like. Further, examples of master batch include KE9193, which is PBT including 15 mass % of the Stabaxol P100, and KE7646, which is PET including 15 mass % of Stabaxol P100.

The amount of such aromatic carbodiimide compound is not particularly restricted, however, the amount of such aromatic carbodiimide compound is preferably 0.05 to 15 parts by mass, more preferably 0.1 to 5 parts by mass with respect to 100 parts by mass of the total amount of the thermoplastic polyester resin and the thermoplastic polyester elastomer. In case the amount of the aromatic carbodiimide compound is less than 0.05 part by mass, the improvement effect on flexibility may not be acquired, and on the other hand, in case the amount of the aromatic carbodiimide compound is more than 15 parts by mass, surface properties may deteriorate, or molding may become difficult by the increase of the molecular weight. Both of cases are not preferable.

Further, the electroconductive endless belt of the present invention preferably contains a thermoplastic polyester elastomer as a resin component. Adding the thermoplastic polyester elastomer improves the flexibility of the belt. Such thermoplastic polyester elastomer preferably has a melting point of 210°C or more, more preferably 210 to 250°C. And as the thermoplastic polyester elastomer, a polyester-polyester type elastomer using a polyesters for the hard and soft segments, as well as a polyester-polyether type elastomer using a polyester for the hard segment and a polyether for the soft segment, may both be preferably used. In addition, as the hard segment of thermoplastic polyester elastomer, generally, polybutylene terephthalate (PBT) or polybutylene naphtalate (PBN) is used as the main component. In the present invention, both types of thermoplastic polyester elastomer can be used. Such thermoplastic polyester elastomer may be used in combination with two or more thereof. In case the melting point of the thermoplastic polyester elastomer is less than 210°C, the tensile elastic modulus(MPa) becomes lower.

Further, the tensile elastic modulus of the electroconductive endless belt of the present invention is preferably 1800 MPa or more. In case the tensile elastic modulus is less than 1800 MPa, when the belt is stretched by driving rollers, wrinkles are likely to occur on the surface of the belt. As a result, the possibility of the occurrence of image failures becomes high. According to the present invention, in case the thermoplastic polyester elastomer is added, the larger the amount of the thermoplastic polyester elastomer, the lower the elastic modulus, to thereby improve the flexibility thereof. In case the thermoplastic polyester having a melting point of 210°C or more is added, 1800 MPa or more of tensile elastic modulus can be achieved within 100/0 to 60/40 in the formulation ratio of the thermoplastic polyester/the thermoplastic polyester elastomer.

Further, in order to adjust the electroconductivity, a conductive agent may be blended in the belt of the present invention. Such conductive agent is not particularly restricted, and a known electroconductive agent, ionic conductive agent or the like may be appropriately used. specific examples of the electroconductive agent include electroconductive carbons such as ketjen black and acetylene black; carbons for rubber such as SAF, ISAF, HAF, FEF, GPF, SRF, FT and MT; carbons for color (ink) with oxidation-treatment, pyrolytic carbons; natural graphite; artificial graphite; metals and metal oxides such as antimony-doped tin oxide, titanium oxide, zinc oxide, nickel, copper, silver, and germanium; electroconductive polymers such as polyaniline, polypyrrole, and polyacetylene; and electroconductive whiskers such as carbon whisker, graphite whisker, titanium carbide whisker, electroconductive potassium titanate whisker, electroconductive barium titanate whisker, electroconductive titanium oxide whisker, and electroconductive zinc oxide whisker. Further, specific examples of the ionic conductive agent include ammonium salts of perchlorates, chlorates, hydrochlorides, bromates, iodates, tetrafluoroborates, sulfates, ethylsulfates, carboxylates, and sulfonates, such as tetraethylammonium, tetrabutylammonium, dodecyltrimethylammonium, hexadecyltrimethylammonium, benzyltrimethylammonium, and modified aliphatic acid dimethylethylammonium; and perchlorates, chlorates, hydrochlorides, bromates, iodates, tetrafluoroborates, sulfates, trifluoromethylsulfates, and sulfonates of alkali metals and alkaline earth metals, such as lithium, sodium, potassium, calcium, and magnesium.

Further, as the polymeric ionic conductive agent, for example, those described in Japanese Unexamined Patent Application Publication No. 9-227717, Japanese Unexamined Patent Application Publication No. 10-120924, Japanese Unexamined Patent Application Publication No. 2000-327922 and Japanese Unexamined Patent Application Publication No. 2005-60658 may be used; however, it is not particularly restricted thereto.

Specific examples of the polymeric ionic conductive agent include those mixtures comprising (A) organic polymer material, (B) ionically conductive polymer or copolymer, and (C) inorganic or a low-molecular-weight organic salt. Here, the component (A) is a polyacrylate ester, polymethacrylate ester, polyacrylonitrile, polyvinyl alcohol, polyvinyl acetate, polyamide such as polyamide 6 or polyamide 12, polyurethane, or polyester, and the component (B) is an oligoethoxylated acrylate or methacrylate, styrene whose aromatic ring is oligoethoxylated, polyether urethane, polyether urea, polyetheramide, polyetheresteramide or polyester-ether block copolymer. The component (C) is an alkali metal, alkaline earth metal, zinc or ammonium salt of an inorganic or low-molecular-weight organic protonic acid, and preferably LiClO₄, LiCF₃SO₃, NaClO₄, LiBF₄, NaBF₄, KBF₄, NaCF₃SO₃, KClO₄, KPF₆, KCF₃SO₃, KC₄F₉SO₃, Ca(ClO₄)₂, Ca(PF₆)₂, Mg(ClO₄)₂, Mg(CF₃SO₃)₂, Zn(ClO₄)₂, Zn(PF₆)₂, Ca(CF₃SO₃)₂ or the like.

Thereamong, a polymeric ionic conductive agent containing a polyetheramide component, polyetheresteramide component or polyester-ether block copolymer component as the component (B) is preferred, and it is also preferred that the polymeric ionic conductive agent additionally contains a low-molecular-weight ionic conductive agent component as the component (C). Further, as such polyetheramide component and polyetheresteramide component, it is particularly preferred that the polyether component contains (CH₂-CH₂-O) and the polyamide component contains polyamide 12 or polyamide 6. Furthermore, as the low-molecular-weight ionic conductive agent component of the component (C), a polymeric ionic conductive agent containing NaClO₄ is particularly preferred. Such polymeric ionic conductive agent is readily available in the market and examples thereof include Irgastat (Registered Trademark) P18 and Irgastat (Registered Trademark) P22 (both are manufactured by Ciba Specialty Chemicals Inc.).

Also preferably used as the polymeric ionic conductive agent in the present invention is a block copolymer constituted by polyolefin blocks and hydrophilic polymer blocks, which are alternatively linked via, for example, an ester bond, amide bond, ether bond, urethane bond or imide bond. Examples of such polyolefin include polyolefins having functional groups, such as a carboxyl group, hydroxyl group and amino group, at both polymer terminals, and polypropylenes and polyethylenes are particularly preferred.

Further, as the hydrophilic polymer, for example, polyether diols such as polyoxyalkylenes having a hydroxyl group as the functional group; polyetheresteramides constituted by a polyamide having a carboxyl group at both terminals and a polyether diol; polyetheramideimides constituted by a polyamideimide and a polyether diol; polyetheresters constituted by a polyester and a polyether diol; and polyetheramides constituted by a polyamide and a polyetherdiamine can be used, and preferred thereamong are polyoxyalkylenes having a hydroxyl group. Examples thereof include polyoxyethylenes (polyethylene glycols) and polyoxypropylenes (polypropylene glycol), which have a hydroxyl group at both terminals.

The block copolymer which can be used as the polymeric ionic conductive agent in the present invention is readily available in the market as, for example, PELESTAT 230, PELESTAT 300 and PELESTAT 303 (all of these are manufactured by Sanyo Chemical Industries, Ltd.). In addition, even in cases where only a small amount of such polymeric ionic conductive agent is added, the antistatic effect can still be maintained by containing a lithium compound, LiCF₃SO₃, to the aforementioned block copolymer. An example of such mixture of block copolymer and lithium compound is commercially available Sankonol TBX-310 (manufactured by Sanko Chemical Industry Co., Ltd.).

In cases where a polymeric ionic conductive agent is used as the electroconductive material, a compatibilizing agent may be added in order to increase the compatibility between the base resin and the polymeric ionic conductive agent.

In the present invention, the aforementioned conductive agent may be used independently or two or more thereof may be appropriately used in combination. For example, an electroconductive agent and ionic conductive agent may be used in combination, and in such a case, the belt can exhibit a stable electroconductivity even against fluctuations in the applied voltage and environmental variations.

As for the amount of the aforementioned conductive agent used, the electroconductive agent is added typically in an amount of not more than 100 parts by mass, for example, 1 to 100 parts by mass, preferably 1 to 80 parts by mass, especially preferably 5 to 50 parts by mass, with respect to 100 parts by mass of the base resin. Further, the ionic conductive agent is added typically in an amount of 0.01 to 10 parts by mass, preferably in the range of 0.05 to 5 parts by mass, with respect to 100 parts by mass of the base resin. Furthermore, the polymeric ionic conductive agent is added typically in an amount of 1 to 500 parts by mass, preferably 10 to 400 parts by mass, with respect to 100 parts by mass of the base resin. In the present invention, it is particularly preferred to add carbon black as the electroconductive material in an amount of 5 to 30 parts by mass with respect to 100 parts by mass of the base resin.

Further, in the belt of the present invention, other functional components can be appropriately blended in addition to the aforementioned components in such a manner that the effects of the present invention are not impaired. For example, various fillers, coupling agents, antioxidants, lubricants, surface treatment agents, pigments, ultraviolet absorbing agents, antistatic agents, dispersing agents, neutralizers, foaming agents, and cross-linking agents may be appropriately blended. Furthermore, a coloring agent may be added to color the belt.

The structure of an electroconductive endless belt of the present invention is not particularly restricted as long as the desired effects of the present invention can be acquired, the electroconductive endless belt of the present invention may have a single-layer structure or a laminated structure in which at least a base layer and a surface layer are sequentially overlaid from the inside. In case of the laminated structure, at least one layer of the base layer or the surface layer preferably contains a thermoplastic polyester resin, a bromine-type flame retardant, an antimony compound and an aromatic carbodiimide compound, more preferably both layers contain a bromine-type flame retardant, an antimony compound and an aromatic carbodiimide compound.

Further, in case the belt of the present invention is used as a lamination belt, the other layer may be laid between the base layer and the surface layer, or on the inner side of the base layer. As such an other layer, for example, the layer of the same composition as the surface layer may be laid on the inner side of the base layer. Additionally, an adhesion layer may be laid between the base layer and the surface layer.

The total thickness of the electroconductive endless belt according to the present invention is appropriately selected depending on the form of the transfer conveyer belt, intermediate transfer member; however, it is preferably in the range of 50 to 200 µm. In addition, the surface roughness of the electroconductive endless belt according to the present invention is, in terms of the JIS 10-point average roughness (Rz), not greater than 10 µm, preferably not greater than 6 µm, more preferably not greater than 3 µm.

Further, as indicated by the dashed line in Fig. 1, the electroconductive endless belt according to the present invention may be equipped with a fitting part on the surface of the side contacting a driving member such as the driving roller 9 of the image forming apparatus illustrated in Fig. 2 or the driving roller 30 of Fig. 3, so that the fitting part formed on the driving member (not shown) is interlocked with the fitting part on the belt. In the electroconductive endless belt according to the present invention, by providing such fitting part and allowing it to be interlocked with the fitting part (not shown) of the driving member, the electroconductive endless belt can be driven while preventing a slippage in the width direction thereof.

In this case, the shape of the aforementioned fitting parts is not particularly restricted; however, they are preferably in the form of consecutive protrusions along the circumferential direction (rotation direction) of the belt as illustrated in Fig. 1, and it is preferred that these protrusions be interlocked with recesses formed along the circumferential direction on the circumferential surface of a driving member such as driving roller.

Here, illustrated in Fig. 1(a) is an example in which one row of consecutive protrusions is provided as the fitting part; however, this fitting part may be constituted by a plurality of protrusions arranged in a line in the circumferential direction (rotation direction) of the belt. Alternatively, the fitting part may be provided in two or more rows (Fig. 1 (b) ) or the fitting part may be provided in the center in the width direction of the belt. Further, the fitting part may not be in the form of protrusions as shown in Fig. 1, but instead, recesses may be formed along the circumferential direction (rotation direction) of the belt, which recesses are allowed to interlock with protrusions formed along the circumferential direction on the circumferential surface of a driving member such as the aforementioned driving roller.

As the production method of the conductive endless belt, for example, the electroconductive endless belt according to the present invention can be produced by kneading a resin composition containing the aforementioned various blend components using a biaxial kneader and subsequently extrusion-molding the thus obtained kneaded mixture with a circular die. Alternatively, a powder coating method such as electrostatic coating, a dip method or a centrifugal casting method can be suitably employed.

### EXAMPLE

The present invention will be described in more detail by way of Examples thereof.

Electroconductive endless belts of each of Examples and Comparative Examples were produced in accordance with the formulations shown in Tables 1 to 5 below. The formulations in the tables below are expressed in part by mass. Specifically, the blend components were melt-kneaded by a biaxial kneader and the thus kneaded mixture was extruded by an extruder equipped with a prescribed circular die at 260°C to obtain a single-layer belt having an inside diameter of 155mm, total thickness of 100 micrometers, and a wide size of 250 mm. Here, the amount of the carbon black blended in each belt was adjusted in such a manner that the volume resistivity was 10⁹ Ω·cm and the surface resistance was 10⁹ Ω-cm/□ at the measuring voltage of 500 V respectively.

For each of the thus obtained belts of Examples and Comparative Examples, evaluation was carried out in accordance with the procedures described below. The results thereof are collectively shown in Tables 1 to 5 below.

### < Measurement of the MVR >

The obtained kneaded mixtures (resin compositions) which constitute of each of Examples and Comparative Examples were dried with a hot air dryer at 130°C for 1 or more hour, then dried with a vacuum dryer at 130 °C for 3 or more hours. Subsequently, based on ASTM D1238, the MVR was measured under the conditions of load 49N (5kgf), preheating time for 10 minutes and 20 minutes, and temperature at 270°C. The MRV variation rate was calculated by the following equation: (the MVR for preheating minutes 20 - the MVR for preheating 10 minutes) / the MVR for preheating 10 minutes × 100 ( % ). It can be evaluated that the better the melt stability is, the smaller the MVR for preheating 10 minutes and the MVR variation rate are.

### <Measurement of the tensile elastic modulus>

The tensile elastic modulus was measured under the following conditions.
Apparatus: Tensile testing machine, EZ test (Analysis software: Trappezium); manufactured by Shimadzu Corporation
Samples: in the form of a strip (length 100 mm x width 10 mm x standard thickness 100 µm)
Tensile rate: 5 mm/sec
Data sampling intervals: 100 msec
Measurement method: inclination at 0.5 to 0.6% elongation (in accordance with the JIS tangent method where indicated) Measuring environment: at room temperature (23 ± 3°C, 55 ± 10%
RH)

### <Number of folding until breaking>

From each of the thus produced belts, a test piece having a length of 100 mm and width of 15 mm was cut out, and the number of folding until breaking was measured using a MIT flex fatigue resistance tester manufactured by Toyo Seiki Seisaku-sho, Ltd. at the bending rate of 175 times/min, rotation angle of 135° and tensile load of 14.7 N (1.5 kgf). The larger the value is, the better the result is, although there is no trouble in use provided that the value is more than 800.

### <Evaluation of flame resistance>

Flame resistance was evaluated based on UL94 standard.

### <Evaluation of surface properties>

Measuring method: The surfaces of the obtained electroconductive endless belts were evaluated by visual inspection.

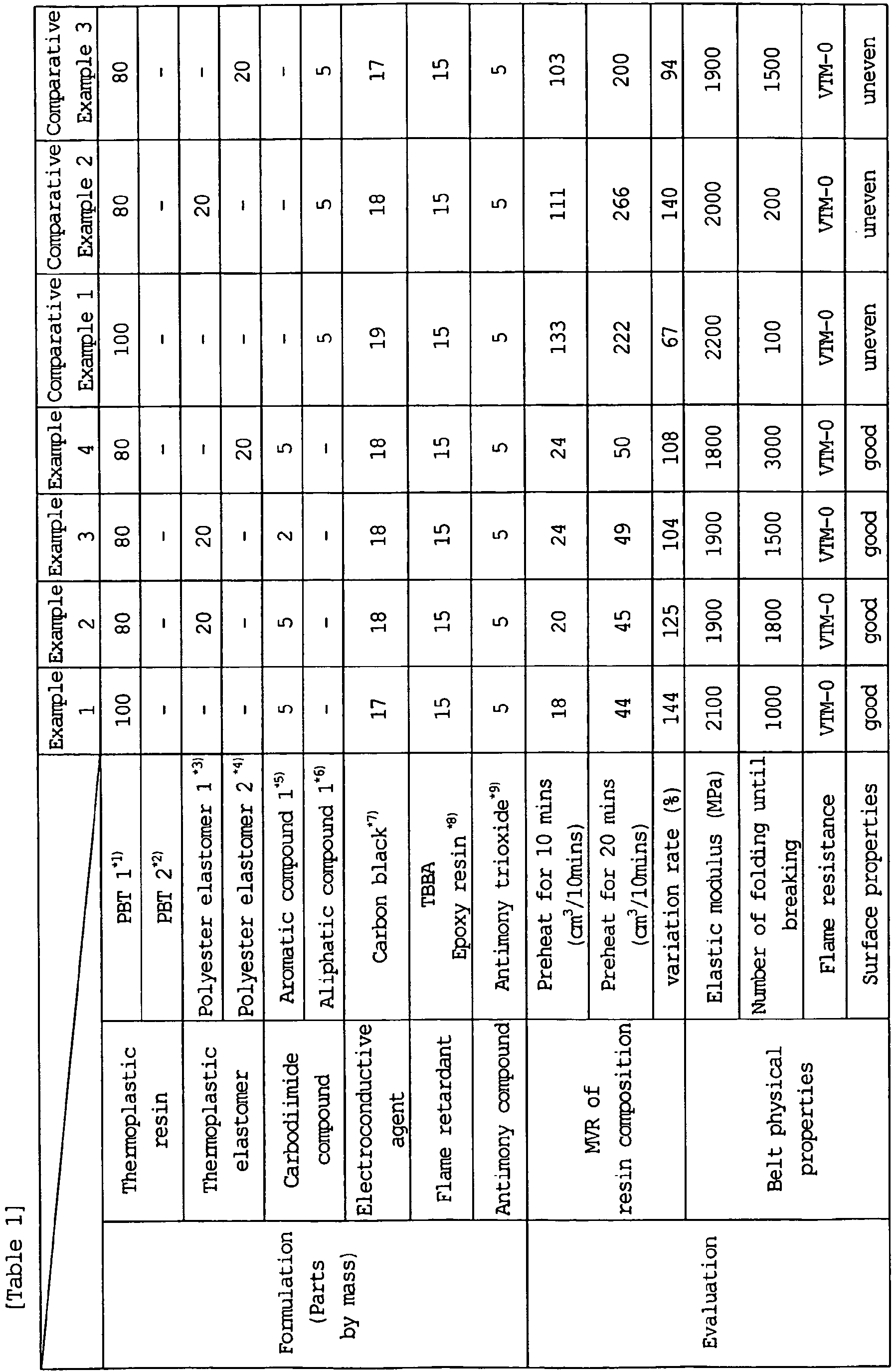

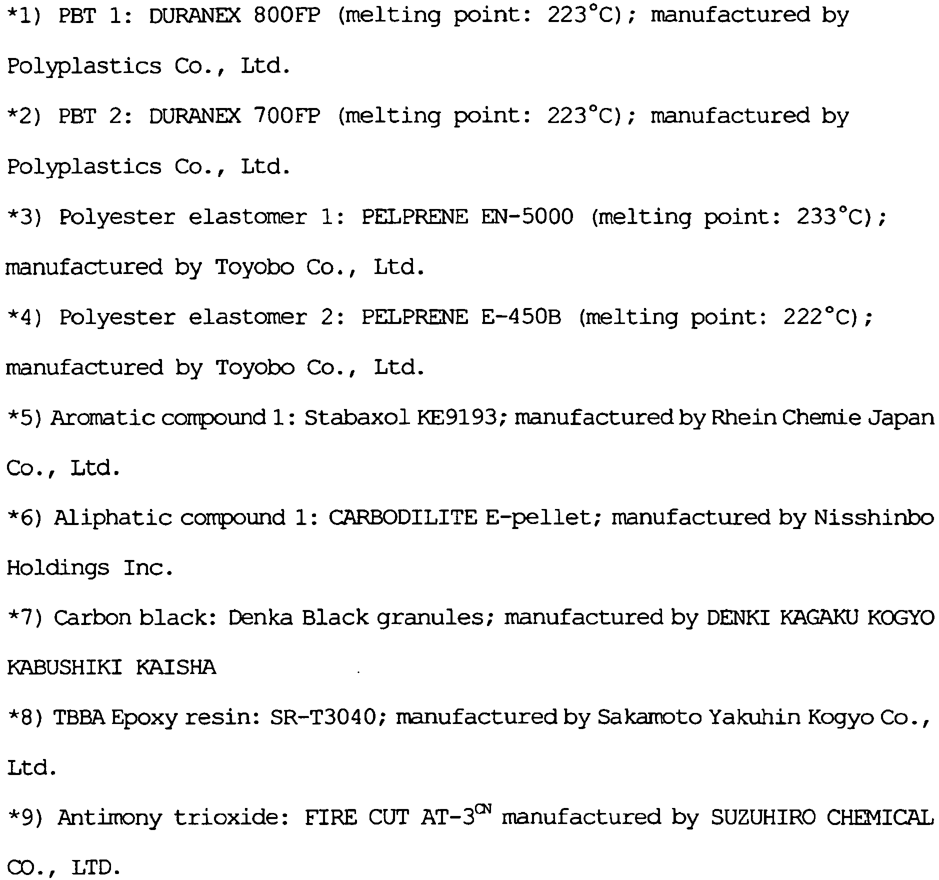

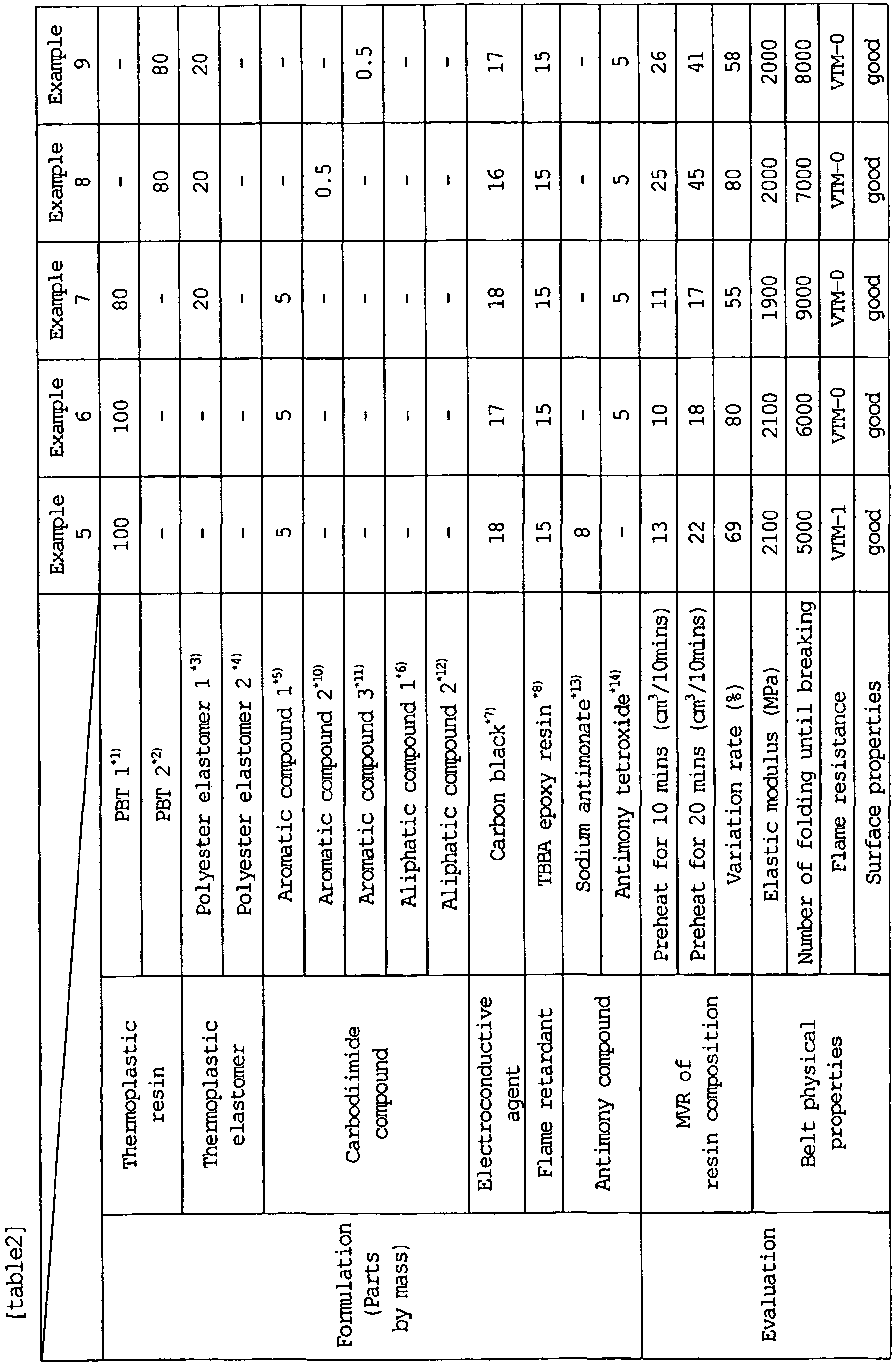

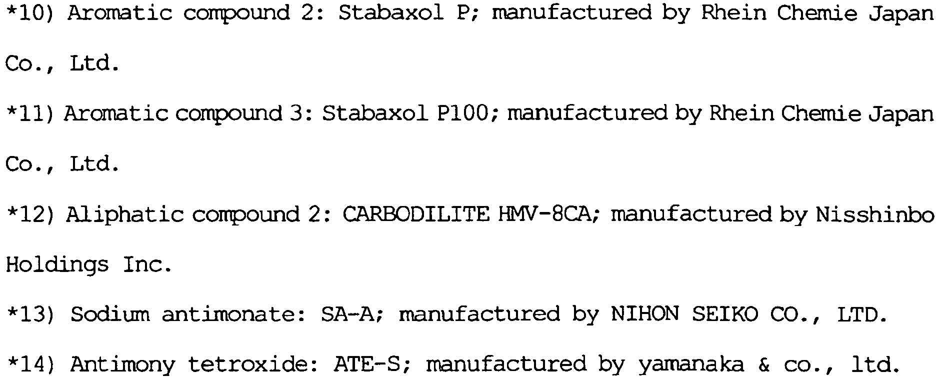

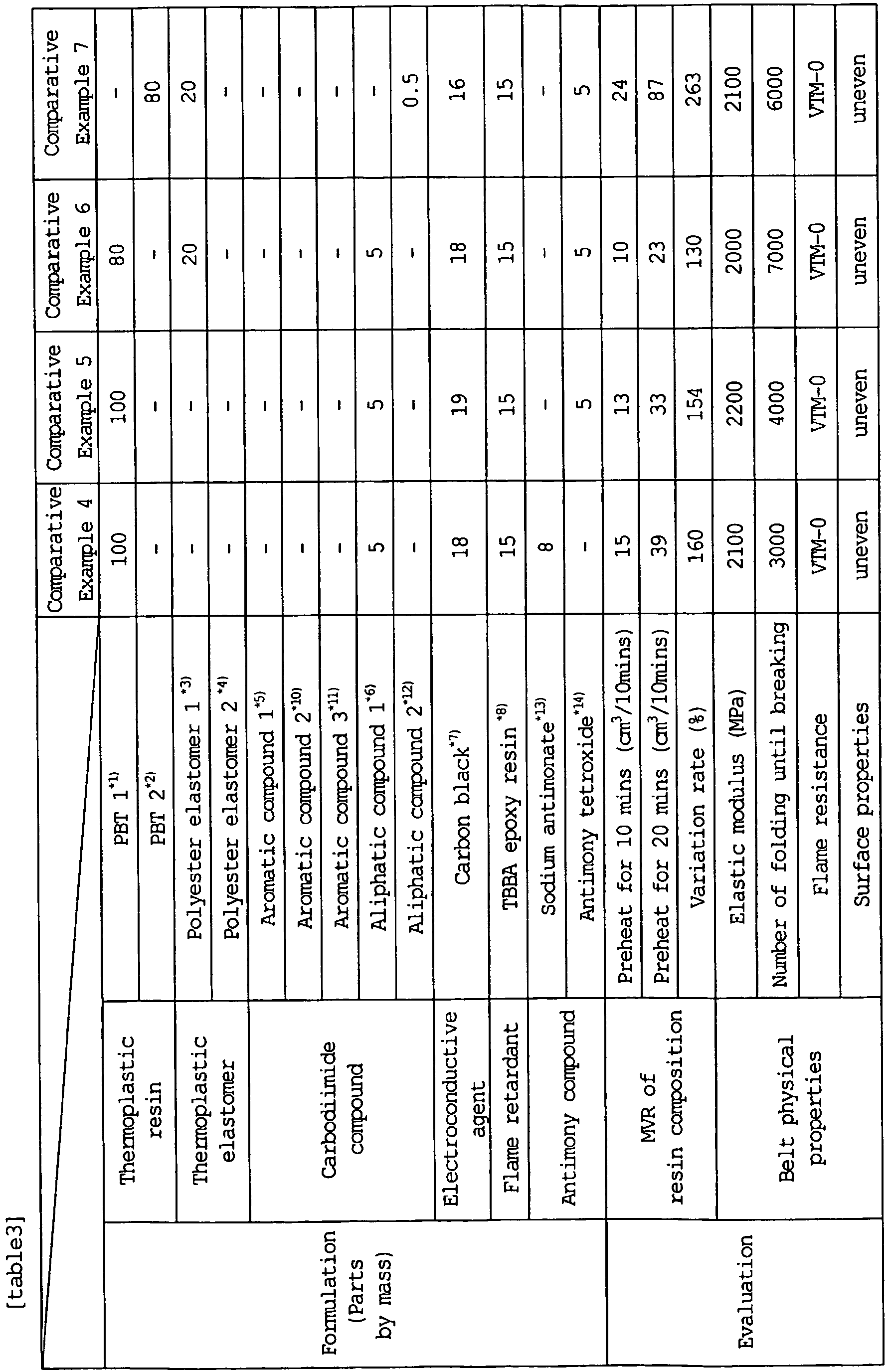

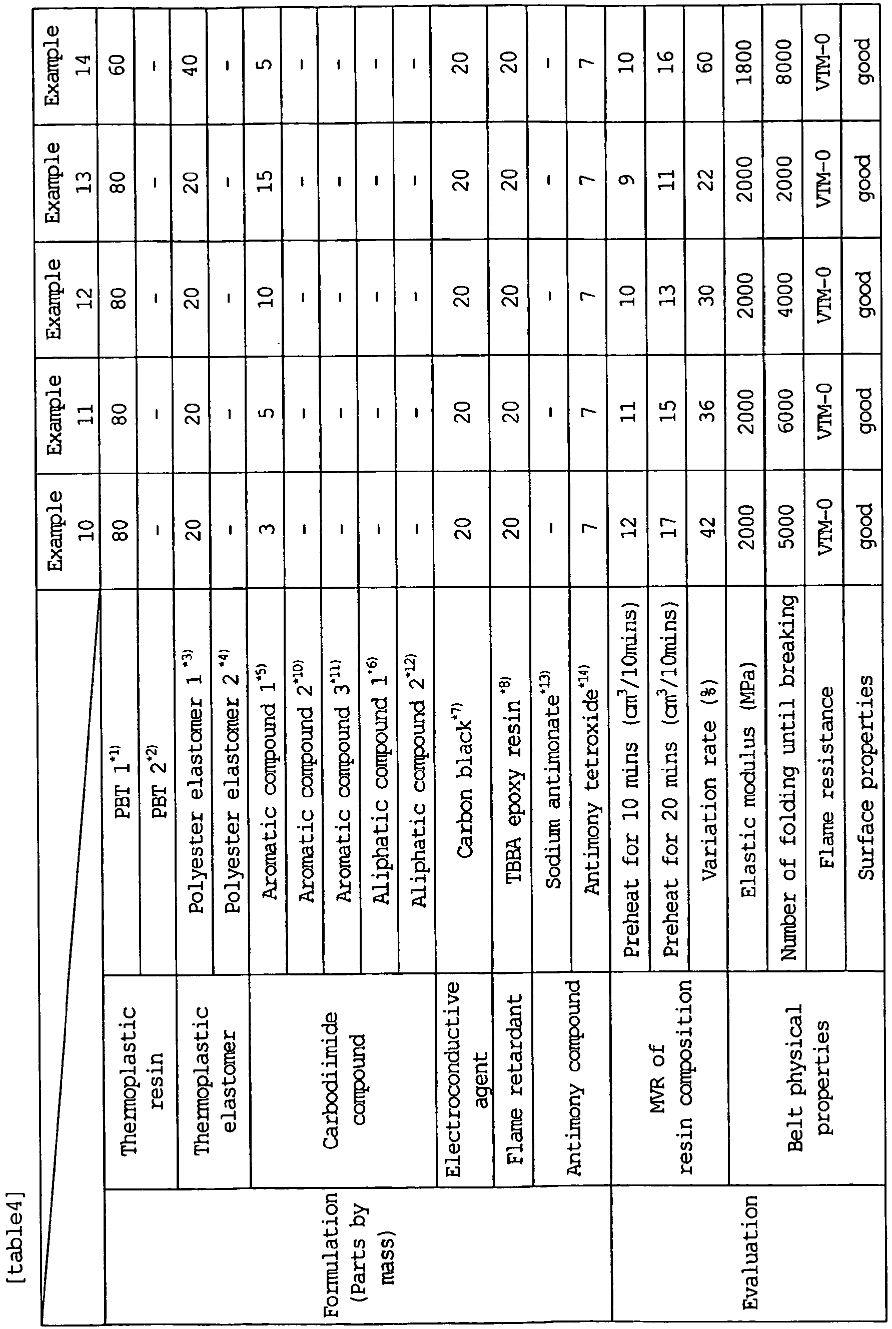

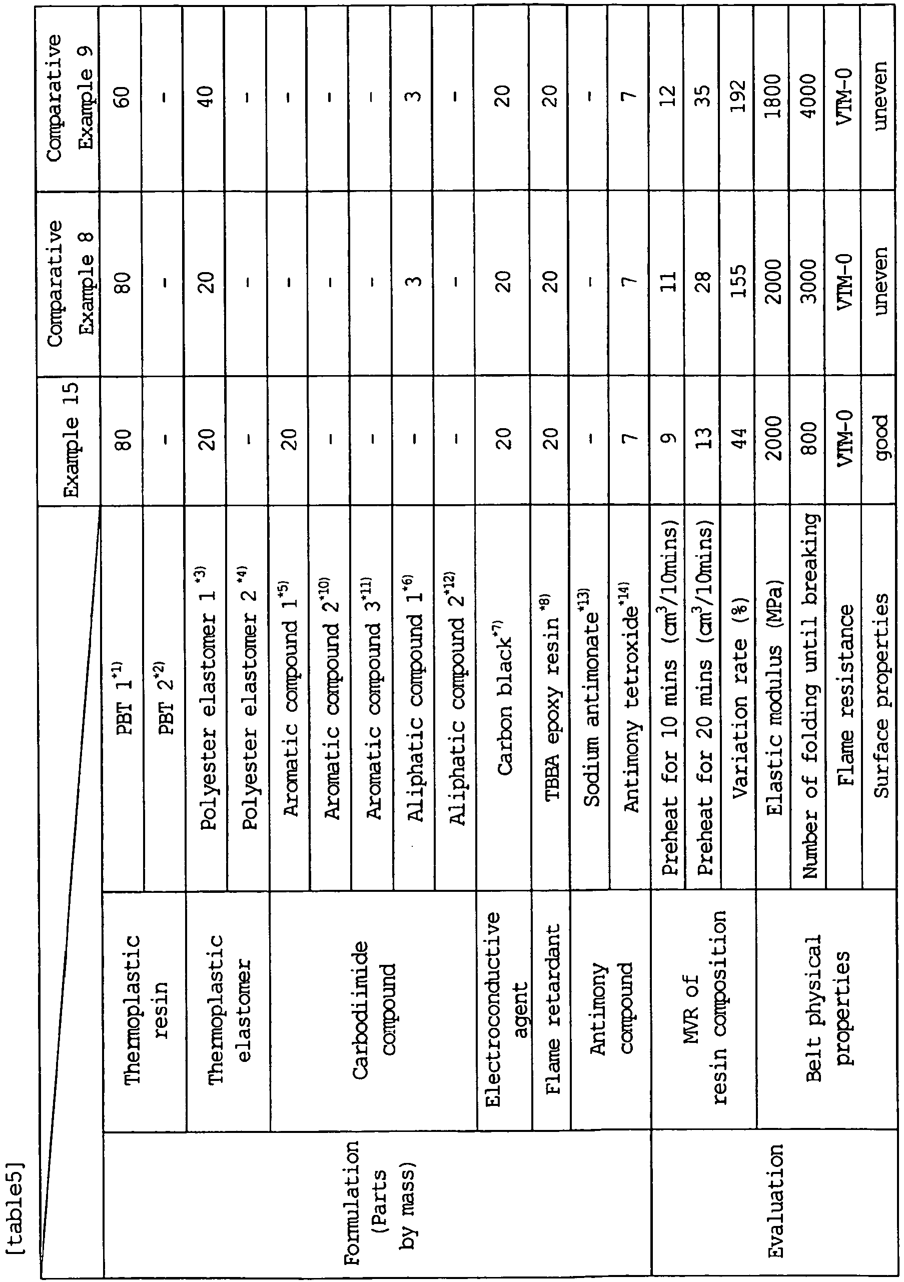

As shown in above tables 1 to 5, in the belt of each example, the values of the MVR for preheating 10 minutes and 20 minutes were small, and thus the melt stabilities at the belt molding time were good. Additionally, it was confirmed that the durabilities were good due to large number of folding until breaking, and the excellent surface properties were acquired. In contrast, in comparative examples 1 to 9 in which an aliphatic carbodiimide compound was added, unevenness occurred on the surface of the belts to deteriorate the surface properties. Moreover, in comparative examples 1 to 3, the values of the MVR for preheating 10 minutes and preheating 20 minutes increased, the melt stabilities during the belt molding were deteriorated, and thus the durabilities were inferior due to small number of folding until breaking.

When the antimony trioxide compound and the aliphatic carbodiimide compound were added like a conventional conductivity endless belt, the melt stability was inferior and unevenness occurred on the surface of the belt, so that improvements of the melt stability and the surface properties have been desired. On the contrary, when the aromatic carbodiimide compound was added according to the present invention, even if the antimony trioxide was used, melt stability and surface properties were improved. Moreover, in case the antimony tetroxide which had low decomposition property was added, even if the aliphatic carbodiimide compound was added, effects on the melt stability could not be insufficiently acquired. In contrast, in case the aromatic carbodiimide compound was added, excellent effects on both melt stability and surface properties could be acquired. The results meant that the stability to the antimony compound of the aromatic carbodiimide compound is higher than that of the aliphatic carbodiimide compound.

### DESCRIPTION OF SYMBOLS

1, 11, 52a to 52d: Photoconductor drum
2, 7: Charging roller
3: Developing roller
4: Developing blade
5: Toner feeding roller
6: Cleaning blade
8: Charge-removing roller
9, 30, 55: Driving roller (driving member)
10: Transfer conveyer belt
12: Primary charging unit
13: Image exposure unit
14, 35: Cleaning unit
19: Paper feeding cassette
20: Intermediate transfer member
25: Transfer roller
26, 53: Recording medium
29, 61: Power source
41, 42, 43, 44: Developing unit
50: Tandem intermediate transfer member
54a to 54d: First to fourth developing units
56: Recording medium feeding roller
57: Recording medium feeding device
58: Fixing device
59: Power source unit (voltage applying means)

## Claims

1. An electroconductive endless belt for use in an image forming apparatus, which comprises a thermoplastic polyester resin as a main component, to which a bromine-type flame retardant, an auxiliary flame retardant antimony compound and an aromatic carbodiimide compound are added.

2. The electroconductive endless belt according to claim 1, wherein said aromatic carbodiimide compound is at least one compound selected from the group consisting of N,N'-diphenylcarbodiimide, N,N'-di-2,6-dimetylphenylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, p-phenylene-bis-di-o-tolylcarbodiimide, p-phenylene-bis-dicyclohexylcarbodiimide, ethylene-bis-diphenylcarbodiimide,
and the compound represented by the following general formula (I): 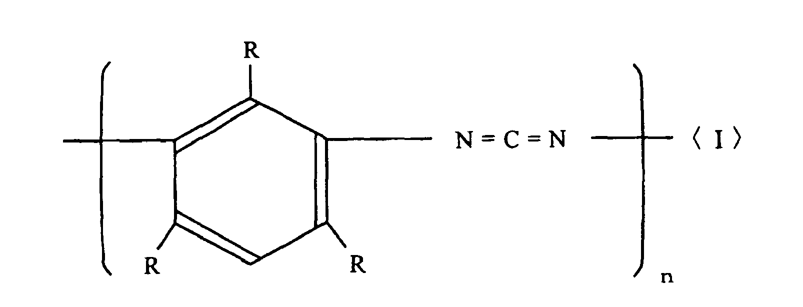 wherein R represents a hydrogen atom or an alkyl group having 1 to 4 carbon atoms, and n represents an integer of 2 to 20.

3. The electroconductive endless belt according to claim 1, wherein said thermoplastic polyester resin is a polybutylene terephthalate resin.

4. The electroconductive endless belt according to claim 1, wherein said electroconductive endless belt comprises a thermoplastic polyester elastomer as a resin component.

5. The electroconductive endless belt according to claim 4, wherein the amount of said aromatic carbodiimide compound is 0.05 to 15 parts by mass with respect to 100 parts by mass of the total amount of said thermoplastic polyester resin and said thermoplastic polyester elastomer.

6. The electroconductive endless belt according to claim 1, wherein said antimony compound is antimony tetroxide.

7. The electroconductive endless belt according to claim 1, wherein said electroconductive endless belt has a lamination structure equipped with at least a base layer and a surface layer sequentially overlaid from the inside, at least one layer of said base layer and said surface layer contains a thermoplastic polyester resin as a main component, to which a bromine-type flame retardant, an antimony compound and an aromatic carbodiimide compound are added.

## Patentansprüche

1. Elektrisch leitendes Endlosband zur Verwendung in einer Bilderzeugungsvorrichtung, wobei das Band ein thermoplastisches Polyesterharz als Hauptkomponente aufweist, der ein Flammschutzmittel auf Brombasis, eine zusätzliche flammenhemmende Antimonverbindung und eine aromatische Carbodiimidverbindung zugesetzt werden.

2. Elektrisch leitendes Endlosband nach Anspruch 1, wobei die aromatische Carbodiimidverbindung mindestens eine Verbindung ist, die aus der Gruppe ausgewählt ist, die aus den folgenden Verbindungen besteht:
N,N'-Diphenylcarbodiimid,
N,N'-Di-2,6-dimethylphenylcarbodiimid,
N,N'-Di-2,6-diisopropylphenylcarbodiimid,
N,N'-Di-2,6-di-tert-butylphenylcarbodümid,
N-Tolyl-N'-phenylcarbodiimid,
N,N'-Di-p-nitrophenylcarbodiimid,
N,N'-Di-p-aminophenylcarbodiimid,
N,N'-Di-p-hydroxyphenylcarbodiimid,
p-Phenylen-bis-di-o-tolylcarbodiimid,
p-Phenylen-bis-dicyclohexylcarbodiimid,
Ethylen-bis-diphenylcarbodiimid,
und die durch die folgende allgemeine Formel (I) dargestellte Verbindung: 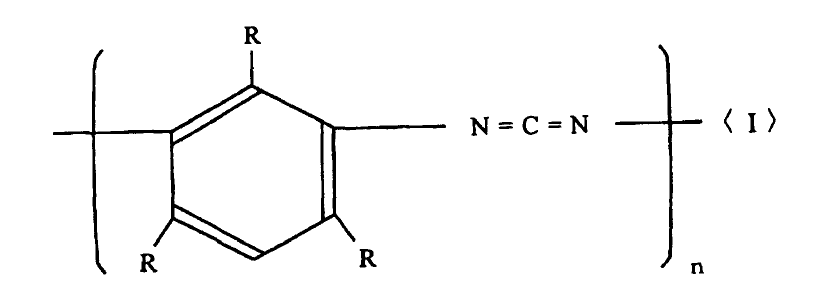 wobei R ein Wasserstoffatom oder eine Alkylgruppe mit 1 bis 4 Kohlenstoffatomen darstellt und n eine ganze Zahl von 2 bis 20 darstellt.

3. Elektrisch leitendes Endlosband nach Anspruch 1, wobei das thermoplastische Polyesterharz ein Polybutylenterephthalatharz ist.

4. Elektrisch leitendes Endlosband nach Anspruch 1, wobei das elektrisch leitende Endlosband ein thermoplastisches Polyesterelastomer als Harzkomponente aufweist.

5. Elektrisch leitendes Endlosband nach Anspruch 4, wobei der Anteil der aromatischen Carbodiimidverbindung 0,05 bis 15 Masseteile beträgt, bezogen auf 100 Masseteile Gesamtanteil des thermoplastischen Polyesterharzes und des thermoplastischen Polyesterelastomers.

6. Elektrisch leitendes Endlosband nach Anspruch 1, wobei die Antimonverbindung Antimontetroxid ist.

7. Elektrisch leitendes Endlosband nach Anspruch 1, wobei das elektrisch leitende Endlosband ein Schichtstruktur aufweist, die mit mindestens einer Basisschicht und einer nacheinander von innen her überlagerten Oberflächenschicht ausgestattet ist, wobei mindestens eine Schicht der Basisschicht und der Oberflächenschicht ein thermoplastisches Polyesterharz als Hauptkomponente enthält, dem ein Flammschutzmittel auf Brombasis, eine Antimonverbindung und eine aromatische Carbodiimidverbindung zugesetzt werden.

## Revendications

1. Bande sans fin électroconductrice pour une utilisation dans un appareil formant des images, qui comprend une résine de polyester thermoplastique en tant que composant principal, à laquelle un agent ignifuge de type brome, un composé d'antimoine ignifuge auxiliaire et un composé de carbodiimide aromatique sont ajoutés.

2. Bande sans fin électroconductrice selon la revendication 1, dans laquelle ledit composé de carbodiimide aromatique est au moins un composé choisi dans le groupe constitué de:
N,N ' -diphénylcarbodiimide,
N,N'-di-2,6-diméthylphénylcarbodiimide,
N,N'-di-2,6-diisopropylphénylcarbodiimide,
N,N'-di-2,6-di-tert-butylphénylcarbodiimide,
N-tolyl-N'-phénylcarbodiimide,
N,N'-di-p-nitrophénylcarbodiimide,
N,N'-di-p-aminophénylcarbodiimide,
N,N'-di-p-hydroxyphénylcarbodiimide,
p-phénylène-bis-di-o-tolylcarbodiimide,
p-phénylène-bis-dicyclohexylcarbodiimide,
éthylène-bis-diphénylcarbodiimide,
et du composé représenté par la formule générale (I) suivante: 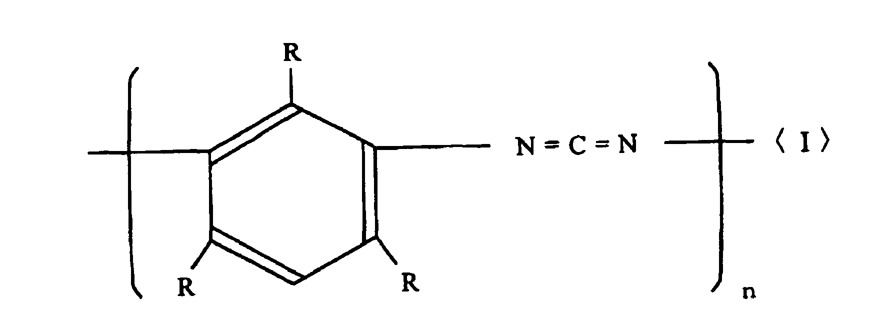 dans laquelle R représente un atome d'hydrogène ou un groupe alkyle possédant de 1 à 4 atomes de carbone, et n représente un nombre entier de 2 à 20.

3. Bande sans fin électroconductrice selon la revendication 1, dans laquelle ladite résine de polyester thermoplastique est une résine de polybutylène téréphtalate.

4. Bande sans fin électroconductrice selon la revendication 1, où ladite bande sans fin électroconductrice comprend un élastomère de polyester thermoplastique en tant que composant de résine.

5. Bande sans fin électroconductrice selon la revendication 4, dans laquelle la quantité dudit composé de carbodiimide aromatique est de 0,05 à 15 parties en poids par rapport aux 100 parties en poids de la quantité totale de ladite résine de polyester thermoplastique et dudit élastomère de polyester thermoplastique.

6. Bande sans fin électroconductrice selon la revendication 1, dans laquelle ledit composé d'antimoine est le tétroxyde d'antimoine.

7. Bande sans fin électroconductrice selon la revendication 1, où ladite bande sans fin électroconductrice possède une structure laminée dotée au moins d'une couche de base et d'une couche de surface séquentiellement recouvertes à partir de l'intérieur, au moins une couche de ladite couche de base et de ladite couche de surface contient une résine de polyester thermoplastique en tant que composant principal, à laquelle un agent ignifuge de type brome, un composé d'antimoine et un composé de carbodiimide aromatique sont ajoutés.
